# EUROPEAN PATENT APPLICATION

(11) **EP 2 641 775 A1**
(43) Date of publication of application: **25.09.2013**
(21) Application number: 11841218.8
(22) Date of filing: 13.10.2011
(51) Int. Cl.: B60N 2/42, B60R 21/02

(54) **VEHICLE SEAT PROVIDED WITH AIRBAG DEVICE**

(30) Priority: 17.11.2010 JP 2010257028
(71) Applicant: Ashimori Industry Co., Ltd., Osaka-shi, Osaka 550-0014 (JP)
(72) Inventor: KOBAYASHI, Hiroshi, Settsu-shi Osaka 566-0001 (JP); SEKINO, Tadaaki, Settsu-shi Osaka 566-0001 (JP); YAMASHITA, Satoshi, Settsu-shi Osaka 566-0001 (JP)
(74) Representative: Appelt, Christian W.
(86) International application number: PCT/JP2011/073534
(87) International publication number: WO 2012/066877

(57) **Abstract**

An air bagged vehicle seat is reduced in weight while the strength thereof is maintained. The vehicle seat is provided with an airbag device which is disposed inside the sitting portion of the vehicle seat and is inflated under the seated occupant. The vehicle seat is provided with a seat pan (50), a first support pipe (40), and seat rails (10) fixed to the floor. The seat pan (50) is provided with a recess for housing the airbag, and a protruding bent section (50A) extending in the left-right direction of the vehicle. The first support pipe (40) is disposed on the rear side of the protruding bent section (50A) so as to extend therealong. The first support pipe (40) is configured in such a manner that the first support pipe (40) is bent in a forward and downward direction of the vehicle and the leg sections (42) of the first support pipe (40) are fastened to the seat rails.

## Description

### Technical Field

The present invention relates to a vehicle seat for automobiles and the like, provided with an airbag device which is inflated inside a sitting portion of the vehicle seat.

### Background Art

When a vehicle such as an automobile, is subjected to a great shock from the front, due to a collision or the like, there may occur a phenomenon, the so-called "submarine phenomenon", in which, because of sinking of the body of an occupant seated on a seat and an inertial force that moves the occupant forward, the waist part of the occupant restrained to the vehicle seat by a seat belt apparatus, slips out from under a wrap belt portion of the seat belt apparatus, to be moved forward.

Therefore, in order to prevent such a phenomenon, there have been proposed a variety of occupant protection apparatuses in which an airbag is disposed inside a sitting portion of a seat, and at the time of a vehicle collision, this airbag is inflated to thereby push up a front portion of a seat cushion for suppressing the forward movement of the waist part of an occupant.
For example, there is known a vehicle seat which is provided with a support member for supporting an airbag as a component independent of a seat pan, both sides thereof being connected to the right and left side frames, respectively (Patent Document 1 to be referenced).

With this vehicle seat, the support member for supporting the airbag is connected to the side frames, and thus the area of the side frames has to be made large as compared with that in the case where the support member is not supported by the side frames, and in addition, unless the strength of the side frame is increased, the side frame is deformed at the time of vehicle collision, there being a possibility that, even if the airbag is inflated, sinking of the seat may not be prevented, and forward movement of the waist part of the occupant may not be sufficiently suppressed. Consequently, there is required the increase of the strength of the side frame for suppression of deformation of the seat, and there arises a problem in which the increase of the strength involves a rise in costs and yet an increase in weight.

### Prior-art Documents

### Patent Document

Patent Document 1: Japanese Unexamined Patent Application Publication No. 2007-276567

### Summary of the Invention

### Problems to Be Solved by the Invention

The present invention has been made in view of the above-described problem, and an object is to provide a vehicle seat provided with an airbag device which is inflated inside a sitting portion of the vehicle seat, wherein it is possible to fully suppress sinking and deformation of the seat at the time of vehicle collision while suppressing an increase in size of the frame, and an increase in weight of the vehicle seat, to thereby allow sufficient suppression of the forward movement of the waist part of the occupant.

### Means for Solving the Problems

(1) The present invention is a vehicle seat provided with an airbag device that is disposed inside a sitting portion of the vehicle seat and is inflated under a seated occupant, the vehicle seat including a seat pan for supporting the vehicle seat; a support frame for supporting the seat pan; and seat rails to be fixed to a floor. The seat pan has an airbag on a surface thereof and includes a protruding bent portion extending along a vehicle left-right direction, the support frame is disposed on the rear face of the protruding bent portion so as to extend therealong, furthermore, the support frame has leg portions bent or inclined in a forward and downward direction of a vehicle in the vicinity of both ends of the protruding bent portion, and the leg portions are fixed to the seat rails.
(2) The present invention is the vehicle seat provided with an airbag device as set forth in item (1) above, wherein the leg portions of the support frame are bent so as to be perpendicular to the seat rails, and are fastened perpendicular to the seat rails.
(3) The present invention is the vehicle seat provided with an airbag device as set forth in item (1) or (2) above, wherein there are provided brackets fixed to the seat rails, and the leg portions of the support frame are fixed to the brackets.
(4) The present invention is the vehicle seat provided with an airbag device as set forth in any one of items (1) to (3) above, wherein the airbag covers the protruding bent portion of the seat pan and is located on the seat pan from the protruding bent portion toward the rear, at the time of inflation.

### Advantages of the Invention

In a vehicle seat provided with an airbag device which is inflated inside a sitting portion of the vehicle seat, it is possible to fully suppress sinking and deformation of the seat at the time of vehicle collision while suppressing an increase in size of the frame, an increase in cost, and an increase in weight of the vehicle seat, to thereby allow sufficient suppression of the forward movement of the waist part of the occupant.

### Brief Description of the Drawings

Fig. 1 is a drawing of a skeleton structure for supporting a vehicle seat according to an embodiment of the present invention, when viewed from obliquely upward, the left side of the drawing indicating the front side of the car body, and the right side the rear side of the car body;
Fig. 2 is a perspective view showing the principal part of the skeleton structure of the vehicle seat in Fig. 1, the left side of the drawing indicating the rear side of the car body, and the right side the front side of the car body;
Figs. 3A to 3D are each a side view of a leg portion of a first support pipe, each illustrating a modification;
Figs. 4A to 4C are each a side view of the vehicle seat according to the embodiment of the present invention, Fig. 4A indicating the airbag device at the time of being not in operation, Fig. 4B indicating that at the time of being activated; and Fig. 4C indicating that at the time of the airbag thereof having been inflated.

### Description of Embodiments

Next, an embodiment of a vehicle seat provided with an airbag device according to the present invention will be explained with reference to the drawings.

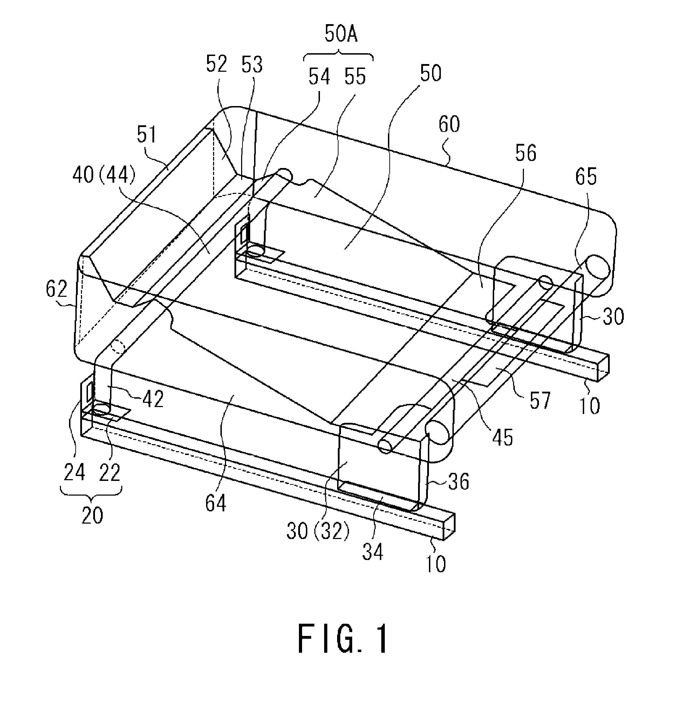

Fig. 1 shows a skeleton structure for supporting a vehicle seat when viewed from obliquely upward, the left side of the drawing indicating the front side of the car body, and the right side the rear side of the car body.
As shown in the figure, the vehicle seat includes a pair of seat rails 10 in the shape of, for example, a hollow prism that is mounted parallel to each other on the floor of the car body, a pair of brackets 20 which is mounted on a front portion of the seat rails 10 (in a car body forward portion), and a pair of side frames 30 which is mounted on a rear portion of the seat rails 10 (in a car body rearward portion).
Here, as shown in the figure, each of the pair of brackets 20 has a shape of the letter L, composed of a horizontal portion 22 and a vertical portion 24 and the horizontal portion 22 is fixed to the seat rail 10 through the use of an appropriate fixing means, for example, screwing, welding or the like. To the horizontal portion 22 of the bracket 20, leg portions 42 on both sides of a first support pipe 40 which will be later described, serving as a support frame, are fixed through the use of fixing means, such as welding. Meanwhile, the mounting end of the first support pipe 40 may be provided with a flange to be fixed to the seat rail 10. In this case, the flange can be fixed by, for example, screwing.

The side frame 30 is comprised of a flat face portion 32 having an approximately rectangular shape, and edge portions 34 and 36 which are formed by folding two adjacent sides of the rectangle approximately at right angles, and which serve as a reinforcement portion, and one of the edge portions (34, 36) i.e. the edge portion 34 is positioned down, overlapping with the seat rail 10 to be mounted thereto through the use of a fixing means (for example, welding, screwing, or arbitrary means). That is, as shown in Fig. 1, as to the side frame 30, the flat face portion 32 is erected upright, with the edge portion 34 adjacent to one side of the flat face portion 32 having an approximately rectangular shape as a bottom portion, and the edge portion 36 extends at right angles to the seat rail 10 and the flat face portion 32, respectively, on the seat rear side.
Between the pair of side frames 30, both end portions of a second support pipe 45 for supporting a rearward portion of a seat pan 50 which will be later described are mounted through the use of an appropriate means.

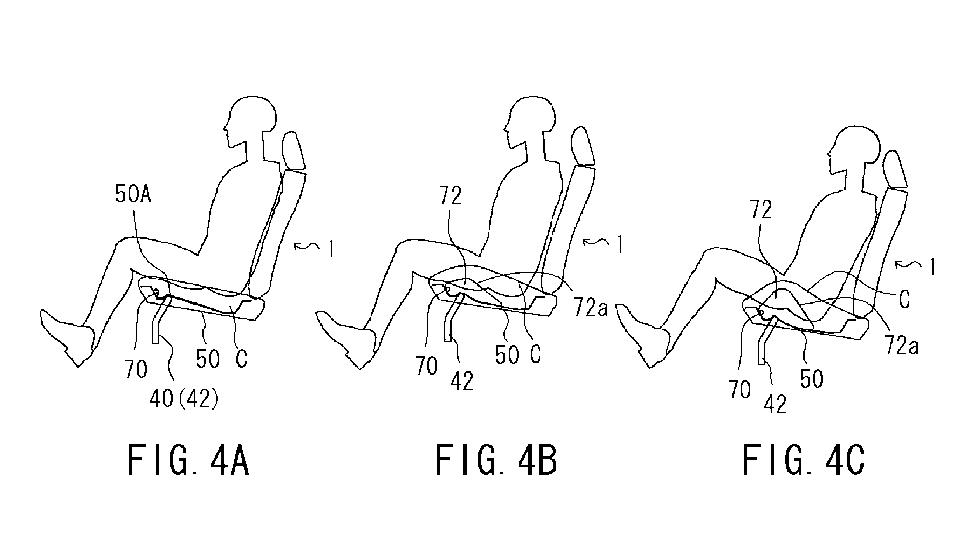

The seat pan 50 for supporting the sitting portion cushion C (Figs. 4A, 4B, and 4C) from thereunder is made of a sheet metal, and as shown in Fig. 1, is having an approximately rectangular shape when viewed from above, a rear end portion thereof being placed on the second support pipe 45, and further being set (or installed) on a connection pipe 65 later described. The front end side of the seat pan 50 is placed on a front face 62 of a seat frame 60 later described.
The surface of the seat pan 50 in which the portion placed on the front face 62 of the seat frame 60 serves as a first horizontal face 51, is composed of: a first inclined face 52, which is inclined downward from the rear end of the first horizontal face 51; a second horizontal face 53, which extends horizontally by a predetermined distance from the lower end of the first inclined face 52; a second inclined face 54, which is inclined obliquely upward from the rear end side of the second horizontal face 53; a third inclined face 55, which is bent in the shape of the reversed letter V at the upper end of the second inclined face 54 and which is gently inclined downward; a third horizontal face 56, which extends horizontally further rearward from the rear end of the third inclined face 55 and which is placed on the second support pipe 45; and a fourth horizontal face (setting face) 57, which rises from the third horizontal face 56 and bent, to be placed on the connection pipe 65.

Here, the first inclined face 52, the second horizontal face 53, which extends horizontally by a predetermined distance from the lower end of the first inclined face 52, and the second inclined face 54, which is inclined obliquely upward from the rear end side of the second horizontal face 53, form a recess for housing an airbag device 70 (Figs. 4A, 4B, and 4C), and the second inclined face 54 and the third inclined face 55 that is inclined more gently than the second inclined face 54, form a bent portion having a cross-section approximately in the shape of the reversed letter V, this portion being particularly referred to as, here, a protruding bent portion 50A.

In the present embodiment, on the rear side of the protruding bent portion 50A of the seat pan 50, the first support pipe 40 is disposed. That is, this protruding bent portion 50A serves as a portion supported by the first support pipe 40. The cross-sectional shape thereof is not required to be limited to the shape of a convexity in which a slope joins with another slope, and may be one that is curved so as to accommodate the shape of the outer periphery of the first support pipe 40. In short, when the front portion of the vehicle is crashed, the cross-sectional shape may have any shape in which the first support pipe 40 can support the inertial force of the occupant seated on the seat and the reaction force against the inflation of the airbag, which are to be applied to the seat pan 50.

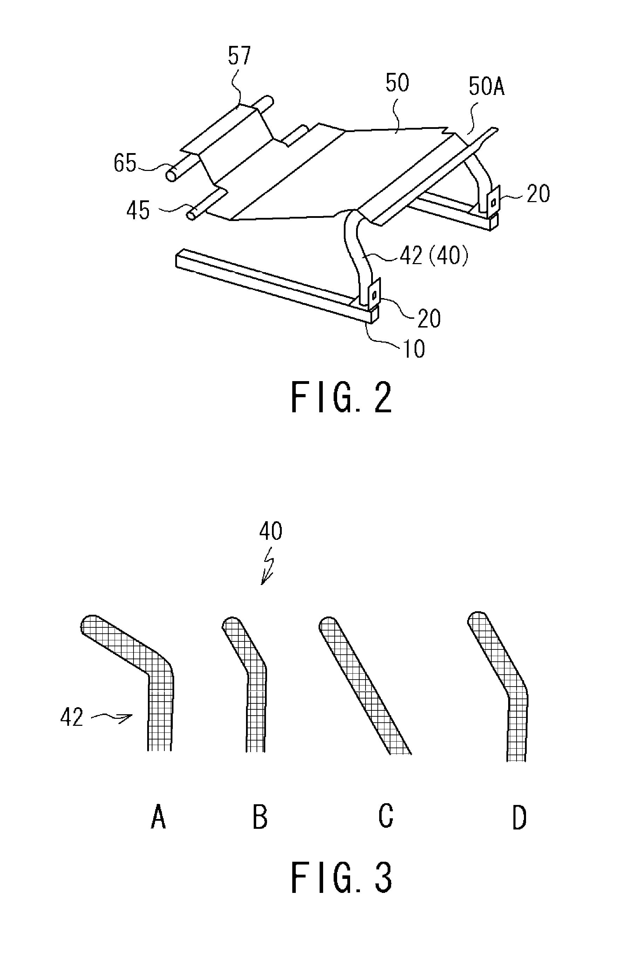

The first support pipe 40 may have an optional cross-sectional shape and a structure, but, here, the pipe is, for example, a circular and hollow steel pipe, being composed of the leg portions 42 provided in both end portions thereof, and a horizontal straight portion 44 communicating with both leg portions. As described later, the leg portion 42 of the first support pipe 40 has a shape that is bent toward the front of the seat frame 60 or a shape that is inclined in the same direction (Figs. 3A to 3D), and the lower end of the leg portion 42 is fixed to the bracket 20 through the use of arbitrary means such as welding.

The seat frame 60 is also made up of a sheet metal and as shown in Fig. 1, is composed of three faces, i.e., the front face 62 and side faces 64 on both sides, and is formed approximately in the shape of the letter U when viewed from above, with the rear end portions of the side faces 64 being opened. Between the rear end portions of the opened side faces 64 of the seat frame 60, a connection pipe 65 is connected through the use of an appropriate means such as welding, screwing, or the like. In the present embodiment, the rear end face, which is one of the faces of the seat frame 60, is opened, and across the rear end portions of the side faces 64, the connection pipe 65 connects, and thus the strength can be increased and the weight can be decreased, as compared with the case where the rear end face is provided.
In addition, the side faces 64 of the seat frame 60 are directly welded to the first support pipe 40, or are mounted on the first support pipe 40 by using, for example, screws via brackets (not shown). Meanwhile, the mounting means is not limited to this, and the use of any well-known means is possible.

In the present embodiment, the airbag device (not shown) is disposed on the first inclined face 52 (denoted by the reference numeral 70 in Figs. 4A to 4C), and at the time of vehicle collision, or the like, starts to inflate in the region having a concave cross-sectional shape constituted by the first inclined face 52 of the seat pan 50, the second horizontal face 53, which horizontally extends by a predetermined distance from the lower end of the first inclined face 52, and the second inclined face 54, which is inclined obliquely upward from the rear end side of the second horizontal face 53.

Fig. 2 is a perspective view showing the principal part of the skeleton structure of the vehicle seat as described above, the left side of the drawing indicating the rear side of the car body, and the right side indicating the front side of the car body.
As shown in the figure, the front end side of the seat pan 50 is supported by the first support pipe 40 serving as a support frame, being mounted on the brackets 20 which are fixed to a pair of seat rails 10, the rear end side thereof is supported by the second support pipe 45, and the rear end portion is supported by (installed on) the connection pipe 65 mounted on the seat frame 60. In addition, the portion of the seat pan 50 supported by the first support pipe 40 serves as the protruding bent portion 50A, as already described.

Figs. 3A, 3B, 3C, and 3D are each a side view of the leg portion 42 of the first support pipe 40.
In the figures, the left side indicates the rear of the vehicle and the right side indicates the front of the vehicle. Any one of Figs. 3A, 3B, and 3D shows a modification of the leg portion 42 in which the first support pipe 40 is inclined forward and then vertically bent, and is mounted on the brackets 20 fixed onto the seat rails 10. The respective leg portions 42 vary in angle of inclination or in length of the inclined portion. Furthermore, Fig. 3C indicates a leg portion which is uniformly inclined with no bent portion. Moreover, although not shown, the leg portion may have a shape which is curved forward.

In short, when the front portion of the vehicle is crashed, the shape of the leg portion 42 of the first support pipe 40 may have any shape in which the leg portion 42 has a shape suitable for supporting the inertial force of the occupant seated on the seat and the reaction force against the inflation of the airbag, which are to be applied to the seat pan 50. Specifically, the shape of the leg portion 42 of the first support pipe 40 may have any shape in which the bent portion of the leg portion 42 is located closer to the vehicle front than the straight portion 44 of the supporting pipe 40 that contacts the protruding bent portion 50A of the seat pan 50, or, when there is no bent portion, the horizontal portion 22 serving as a mounting portion of the bracket 20 is located closer to the vehicle front than the straight portion 44 of the supporting pipe 40.

Next, the function of the present embodiment will be explained.
Figs. 4A to 4C are each a side view of the vehicle seat according to the embodiment of the present invention, showing a state in which an occupant restrained with a wrap belt (not shown) is seated in the vehicle seat. Fig. 4A indicates that the airbag is in a state before being inflated, Fig. 4B indicates that the airbag is in a state of starting to be inflated, and Fig. 4C indicates that the airbag is in a state of having been completely inflated.

According to the present embodiment, when the vehicle is caused to be suddenly decelerated because of a collision or the like, the inertial force of the occupant due to the sudden stop and the reaction force against the inflation of the airbag act in a forward and downward direction of the vehicle. These forces are received by the third inclined face 55 on the rear side of the protruding bent portion 50A of the seat pan 50, thereby the seat pan 50 being deflected, and at that time, the first support pipe 40 supports the seat pan 50 under the protruding bent portion 50A to accommodate deformation toward the front side of the seat pan 50. The force which has been received by the first support pipe 40 and the force trying to deform the first support pipe 40 forward are received by the brackets 20, and the force is finally received by the seat rails 10.

That is, when the airbag device 70 is activated at the time of vehicle collision, the airbag 72 thereof starts to inflate in the housing recess comprised of, as shown in Fig. 1, the first inclined face 52 of the seat pan 50, the second horizontal face 53 extending by a predetermined distance from the lower end of the first inclined face 52, and the second inclined face 54 which is inclined obliquely upward from the rear end side of the second horizontal face 53. Thereafter, the airbag 72 further inflates while spreading out between the seat pan 50 and the sitting portion cushion C (Fig. 4B), and with the airbag 72 being fully inflated, the sitting portion cushion C is lifted to the utmost extent, and forward movement of the occupant is suppressed on the slope face 72a on the rear side of the airbag 72 (Fig. 4C). Thereby, there can be prevented occurrence of the so-called submarine phenomenon, in which the waist part of the occupant restrained to the vehicle seat 1 by a seat belt apparatus slips out from under a wrap belt portion of the seat belt apparatus, to be moved forward.
The inertial force of the occupant and the reaction force against the inflation of the airbag 72 that act at that time are received by the first support pipe 40 through the protruding bent portion 50A of the seat pan 50, and are transmitted by the leg portions 42 from the seat rails 10 to the car body floor.

Therefore, for reinforcement of the vehicle seat 1 according to the present embodiment, only the first support pipe 40, the brackets 20, and the seat rails 10 will suffice, and there is no need for reinforcement of other members of the vehicle seat 1. As a result, reduction in weight and size as a whole is possible, and thus the cost can be suppressed.

The embodiment of the present invention has been explained as above, and according to the present embodiment, the following functional advantages can be obtained.
(1) When, at the time of vehicle collision, the inertial force of the occupant and the reaction force against inflation of the airbag impose a load on the seat pan 50, the first support pipe 40 receives the load, and thus the seat pan 50 is difficult to be deformed.
(2) Since the first support pipe 40 is fastened to the seat rails 10, there is no need of side frames for supporting the first support pipe 40 in the front portion, which thereby allows cutting the number of parts and also reducing the weight of the seat.
(3) In comparison with the conventional vehicle seat as disclosed in Patent Document 1, in which side frames are used for securing the strength that suppresses the seat deformation, a simple structure allows suppression of the seat deformation (prevention of seat sinking). Since the first support pipe 40 is provided in the bent portion of the seat pan 50 in the shape of the reversed letter V (the protruding bent portion 50A), displacement of the seat pan 50 due to the inertial force of the occupant and the reaction force against inflation of the airbag at the time of vehicle collision can be reliably prevented.

### Description of the Reference Symbols

- 1: Vehicle seat
- 10: Seat rail
- 20: Bracket
- 30: Side frame
- 40: First support pipe
- 42: Leg portion
- 50: Seat pan
- 50A: Protruding bent portion
- 51: First horizontal face
- 52: First inclined face
- 53: Second horizontal face
- 54: Second inclined face
- 55: Third inclined face
- 56: Third horizontal face
- 60: Seat frame
- 65: Connection pipe

## Claims

1. A vehicle seat provided with an airbag device that is disposed inside a sitting portion of the vehicle seat and is inflated under a seated occupant, comprising:
a seat pan for supporting the vehicle seat;
a support frame for supporting the seat pan; and
seat rails to be fixed to a floor, wherein
the seat pan has an airbag on a surface thereof and includes a protruding bent portion extending along a vehicle left-right direction;
the support frame is disposed on the rear face of the protruding bent portion so as to extend therealong;
furthermore, the support frame has leg portions bent or inclined in a forward and downward direction of a vehicle in the vicinity of both ends of the protruding bent portion, and
the leg portions are fixed to the seat rails.

2. The vehicle seat provided with an airbag device according to claim 1, wherein the leg portions of the support frame are bent so as to be perpendicular to the seat rails, and are fastened perpendicular to the seat rails.

3. The vehicle seat provided with an airbag device according to claim 1 or 2, wherein there are provided brackets fixed to the seat rails, and the leg portions of the support frame are fixed to the brackets.

4. The vehicle seat provided with an airbag device according to any of claims 1 to 3, wherein the airbag covers the protruding bent portion of the seat pan and is located on the seat pan from the protruding bent portion toward the rear, at the time of inflation.
